# EUROPÄISCHE PATENTSCHRIFT

(11) **EP 2 361 884 B1**
(45) Veröffentlichungstag und Bekanntmachung des Hinweises auf die Patenterteilung: **14.11.2018**
(21) Anmeldenummer: 10152138.3
(22) Anmeldetag: 29.01.2010
(51) Int. Cl.: C01F 7/06, C01F 7/16, C01G 49/02, B01J 21/02

(54) **Verfahren zum Verwerten von Rotschlamm**
Method for exploiting red mud
Procédé d'évaluation de boues rouges

(43) Veröffentlichungstag der Anmeldung: 31.08.2011
(73) Patentinhaber: KRSys GMBH, 85579 Neubiberg (DE)
(72) Erfinder: Krause, Eberhard, 16540 Hohen Neudorf (DE)
(74) Vertreter: Hofstetter, Schurack & Partner

(56) Entgegenhaltungen:
- DE-A1- 2 313 816
- US-A- 2 992 893
- US-A- 3 776 717
- US-A- 3 776 717
- US-A- 4 486 393
- DATABASE WPI Week 200127 Thomson Scientific, London, GB; AN 2001-258545 XP002592974 "Process for recovering alkali by red mud waste liquid film method" -& CN 1 150 578 A (SHANDONG ALUMINIUM IND CORP) 28. Mai 1997 (1997-05-28)
- WHITTINGTON B I: "The chemistry of CaO and Ca(OH)2 relating to the Bayer process" HYDROMETALLURGY, ELSEVIER SCIENTIFIC PUBLISHING CY. AMSTERDAM, NL LNKD- DOI:10.1016/0304-386X(96)00009-6, Bd. 43, Nr. 1, 1. November 1996 (1996-11-01), Seiten 13-35, XP004040807 ISSN: 0304-386X

## Beschreibung

Die Erfindung betrifft ein Verfahren zum Verwerten von Rotschlamm.

Bei der Aluminium-Produktion gemäß dem Bayer-Verfahren wird mit Hilfe von Natronlauge Al₂O₃ aus fein gemahlenem Bauxit herausgelöst. Aus der dabei erhaltenen Natriumaluminat-Lösung wird nach Animpfen mit Kristallisationskeimen reines Al(OH)₃ (Gibbsit) gefällt, aus welchem schließlich durch Elektrolyse metallisches Aluminium gewonnen wird. Zurück bleibt ein Gemisch, das sich chemisch betrachtet hauptsächlich aus Eisenoxiden bzw. - hydroxiden, Titanoxiden, Aluminiumoxidresten, Quarzsand, Kalziumoxid, Natriumoxid und Restnatronlauge zusammensetzt. Wegen seiner durch Eisen(III)-oxid hervorgerufenen roten Farbe wird dieser Rückstand als Rotschlamm (oder "red mud") bezeichnet.

Zu jeder produzierten Tonne Aluminium fallen je nach Qualität des verwendeten Bauxits 1 bis 1,5 Tonnen Rotschlamm als nicht vermeidbarer Begleiter an. Jedes Jahr entstehen daher mehrere Millionen Tonnen an Rotschlamm, die zusammen mit den bereits vorhandenen Rotschlamm-Abfällen ein ernsthaftes Umwelt- und Entsorgungsproblem darstellen. Das Hauptproblem ist die aufgrund seines Natronlaugengehalts hohe Alkalität des Rotschlamms, der üblicherweise pH-Werte zwischen 11 und 14 aufweist. Darüber hinaus stellen toxisch wirkende Aluminium-Ionen zusammen mit Eisen-Verbindungen eine große Gefahr für das Grundwasser dar und erschweren eine umweltgerechte Lagerung zusätzlich.

Die Entsorgung des Rotschlamms erfolgt daher im Wesentlichen durch Einlagerung in abgedichteten Deponien. Die am Boden der Deponie austretende Natronlauge wird gesammelt und in den Bayer-Prozess rückgeführt. Diese Form der Lagerung ist jedoch teuer und aufwändig, da große Deponieflächen und -anlagen benötigt werden und hohe Kosten für den Transport des Rotschlamms anfallen. Zudem sind die durch die Deponierung entstehenden Langzeitkosten nur schwer kalkulierbar und stellen ein zusätzliches wirtschaftliches Problem dar. Derzeit existieren Deponiebestände mit etwa 1,5 Mrd. Tonnen Rotschlamm. Zu diesen kommen jährlich etwa 50 Mio. Tonnen Rotschlamm dazu.

Die Deponierungskosten können verringert werden, wenn der bislang als Abfallprodukt betrachtete Rotschlamm in nutzbare Wertstoffe umgewandelt bzw. zur Gewinnung von Wertstoffen verwendet werden kann. Eine wichtige Vorbedingung für eine wirtschaftliche Verwertung des Rotschlamms im großtechnischen Maßstab ist die Reduzierung seines hohen Alkaligehalts.

Ein bekanntes Verfahren der technischen Chemie stellt das Kaustifizieren des Rotschlamms dar. Bei diesem Verfahren wird gebrannter Kalk zu Rotschlamm zugegeben, wonach der dabei entstehende Schlamm auf 85°C bis 100°C erwärmt wird.

Nachteilig an diesem bekannten Verfahren ist jedoch der Umstand, dass der Rotschlamm nach dem Kaustifizieren erhebliche Mengen an Natriumoxid umfasst, welches während der Reaktion gebildet wird, ein Fortschreiten der Reaktion verhindert und in verschiedenen chemischen Formen im Reaktionsprodukt gebunden bleibt.

Ein alternatives, als "Basecon™ Technology" geschütztes Verfahren der Firma Virotec International PLC erreicht durch die Zugabe von Meerwasser oder anderer Calcium- und Magnesium-reicher Salzlösungen zu Rotschlamm bei Raum- bzw. Umgebungstemperatur eine Verringerung des pH-Werts und eine Ausfällung unterschiedlicher Metallhydroxide, -carbonate oder - hydroxycarbonate. Die Neutralisierung wird als abgeschlossen angesehen, sobald die überstehende Lösung einen pH-Wert von etwa 9 erreicht hat und die Alkalinität bezogen auf Calciumcarbonat weniger als 200 mg/l beträgt.

Als nachteilig an diesem Verfahren ist der Umstand anzusehen, dass der Rotschlamm zum zumindest weitgehenden Neutralisieren mit einem 12- bis 20-fachen Volumen an Meerwasser gewaschen werden muss. Alternativ muss der Salzgehalt des Meerwassers unter hohen Energiekosten zunächst durch Eindampfen erhöht werden, wobei selbst in diesem Fall immer noch die 6-bis 10-fache Menge an Salzlösung zur Neutralisierung benötigt wird. Weiterhin ist als nachteilig anzusehen, dass kein umfassender Gebrauch der verschiedenen, im Rotschlamm enthaltenen Wertstoffe erfolgt und das wirtschaftliche und ökologische Potenzial des Rotschlamms nur zu einem Bruchteil ausgeschöpft wird.

Die DD 94 170 A5 offenbart ein Verfahren, bei welchem Rotschlamm, gebrannter Kalk und Huminsäure bzw. Huminsäurederivate suspendiert und 1 bis 6 Stunden auf Temperaturen zwischen 80°C und 100°C erwärmt werden. Hierdurch geht ein großer Teil des Alkaligehalts des Rotschlamms in Form von Alkalihumaten in Lösung und kann vom wasserunlöslichen Rückstand abgetrennt werden. Der natriumarme Rückstand wird anschließend zur Eisen-Gewinnung einem Reduktions- und Schmelzarbeitsgang unterworfen.

Nachteilig ist hierbei jedoch, dass die Huminsäure in 2- bis 10-fachem stöchiometrischen Überschuss bezogen auf den Alkaligehalt vorliegen muss, was im großtechnischen Rahmen zu erheblichen Zusatzkosten führt und letztlich nicht durchführbar ist. Darüber hinaus ist das Verfahren sehr energieaufwändig und ermöglicht weiterhin nur eine eingeschränkte Nutzbarmachung des wirtschaftlichen und ökologischen Potenzials von Rotschlamm.

Aus der US 4 4B6 393 A ist ein Verfahren bekannt, bei welchem Rotschlamm mit Kalk oder Kalkmilch vermischt und unter Rühren auf eine Temperatur zwischen 70°C und 100°C erwärmt wird. Anschließend wird dem Gemisch Soda zugegeben, wonach das Gemisch für 1 bis 4 Stunden auf 80°C bis 100°C erwärmt wird. Schließlich wird zumindest ein Teil des entstandenen Gemischs einer Waschlinie einer Bayer-Prozessanlage zugeführt, um die Verluste an Natriumhydroxid während des Bayer-Verfahrens zu verringern.

Die CN 1 150 578 A offenbart ein Verfahren, bei welchem Natrium-Bestandteile aus Rotschlamm durch Zugabe von Calciumoxid entfernt werden, wobei das Gemisch durch Dampfeinleitung auf 80°C bis 95°C erwärmt wird. Das entstandene Gemisch wird mehrfach filtriert, um die alkalihaltige flüssige Phase abzutrennen.

Aus der US 2 992 893 A geht ein Verfahren hervor, bei welchem ein Mineral wie beispielsweise Bauxit, das Aluminiumoxid und Siliciumdioxid enthält, mit einem wässrigen Alkalimetallhydroxid behandelt wird, um das Aluminiumoxid aufzulösen. Die resultierende wässrige Lösung wird dann vom ungelösten Material abgetrennt.

Aus der US 3 776 717 A ist ein Verfahren bekannt, bei welchem Rotschlamm in Gegenwart von Huminsäure mit Branntkalk versetzt wird. Der Rückstand wird durch Reduktion und Aufschmelzen zur Wiedergewinnung von Eisen verwendet, wobei die Huminsäure zur Einstellung des Kohlenstoffanteils dient.

Aufgabe der vorliegenden Erfindung ist es, ein großtechnisch realisierbares Verfahren zur möglichst umfassenden Verwertung von Rotschlamm zur Verfügung zu stellen, welches sowohl für den jährlich anfallenden als auch für den bereits deponierten Rotschlamm einsetzbar ist.

Die Aufgabe wird erfindungsgemäß durch ein Verfahren gemäß Patentanspruch 1 zum Verwerten von Rotschlamm gelöst. Vorteilhafte Ausgestaltungen mit zweckmäßigen Weiterbildungen der Erfindung sind in den Unteransprüchen angegeben.

Bei einem erfindungsgemäßen Verfahren zum Verwerten von Rotschlamm werden zumindest die Schritte a) Herstellen einer wässrigen Suspension, welche Rotschlamm und zumindest ein Calcium-Salz umfasst, b) Erwärmen der Suspension auf eine Temperatur zwischen 42°C und 55°C, und c) Abtrennen wenigstens eines Teils einer wässrigen Phase vom einem festen, in Schritt b) erzeugten Produktgemisch durchgeführt. Das in Schritt c) abgetrennte Produktgemisch wird in einem weiteren Schritt d) mit Biomasse, insbesondere mit Holz, Hackschnitzeln, Rinde, Stroh, Bagasse, Blattmasse, Pflanzenabfällen, Gras, Laub, Dung, Pflanzenöl, Klärschlamm, Gülle, organischem Hausmüll und/oder Sägespänen, vermischt. Das in Schritt c) abgetrennte und in Schritt d) mit Biomasse vermischte Produktgemisch wird in einem weiteren Schritt e) auf eine Temperatur zwischen 250°C und 450°C erwärmt. Mit Hilfe des in der vorstehend genannten Weise hergestellten Produktgemischs, welches im Rahmen der hierbei ablaufenden Reaktionen katalytische Eigenschaften aufweist, kann somit eine Biomassevergasung mit entsprechender Wertstoffgewinnung bei besonders niedrigen Temperaturen durchgeführt werden. Demgegenüber müssen aus dem Stand der Technik bekannte Biomassevergasungen bei Temperaturen von mindestens 750°C-800°C durchgeführt werden. Ein weiterer wesentlicher Unterschied besteht darin, dass die Biomassevergasung trotz der niedrigen Temperaturen von höchsten 450°C aufgrund der katalytischen Eigenschaften des Produktgemisches teerfrei und ohne nennenswerte Carbonsäurebildung (insbes. ohne Essigsäure- und Ameisensäurebildung) abläuft. Bei aus dem Stand der Technik bekannten Biomassevergasungs-Verfahren entstehen demgegenüber selbst bei wesentlich höheren Temperaturen üblicherweise große Teermengen, die zu verschiedenen erheblichen Problemen führen. Als Calcium-Salz wird dabei vorzugsweise ein Calciumoxid und/oder ein Calciumhydroxid verwendet, wobei Branntkalk, Weißkalk und/oder Löschkalk besonders bevorzugt sind. Grundsätzlich können im Rahmen des erfindungsgemäßen Verfahrens alle Calcium-Salze verwendet werden, wobei wasserlösliche Calcium-Salze in der Regel bessere Ausbeuten ermöglichen. Als wasserlösliche Calciumsalze kommen beispielsweise in Frage: Calciumacetat, Calciumchlorid, Calciumbromid, Calciumnitrat, Calciumphosphate bzw. deren Hydrate, Calciumchlorid, Calciumsulfat, Calciumlactat, Calciummalat, Calciumcitrat und/oder Calciumnitrat. Als in Wasser nicht- oder schwerlösliche Calciumsalze werden im Rahmen der Erfindung solche Salze verstanden, die bei 20°C zu weniger als 0,1 Gew.-% (1 g/l) in Wasser löslich sind. Solche Calciumsalze sind z.B. Calciumhydroxyphosphat (Ca₅[OH(PO₄)₃]) bzw. Hydroxylapatit, Calciumfluorphosphat (Ca₅[F(PO₄)₃]) bzw. Fluorapatit, fluordotierter Hydroxylapatit der Zusammensetzung Ca₅(PO₄)₃(OH,F) und Calciumfluorid (CaF₂) bzw. Fluorit, Hydroxylapatit, Fluorapatit, Flussspat sowie andere Calciumphosphate wie Di-, Tri- oder Tetracalciumphosphat (Ca₂P₂0₇, Ca₃(PO₄)₂, Ca₄P₂0₉, Oxyapatit (Ca₁₀(PO₄)₆O) oder nichtstöchiometrischer Hydroxylapatit (z.B. Ca_{5 1/2}(x+y) (PO₄)_{3_x}(HPO₄) x (OH)). Geeignet sind ebenfalls carbonathaltige Calciumphosphate, Calciumhydrogenphosphat (z. B. Ca(HPO₄)*2 H₂0) und Octacalciumphosphat. Die Verwendung wasserfreier Calciumsalze ist zwar möglich, aber nicht erforderlich, da die Reaktion in wässrigem Medium durchgeführt wird.

Unter einer Temperatur zwischen 42°C und 55°C sind im Rahmen der Erfindung Temperaturen von 42°C, 43°C, 44°C, 45°C, 46°C, 47°C, 48°C, 49°C, 50°C, 51°C, 52°C, 53°C, 54°C und/oder 55°C sowie entsprechende Zwischentemperaturen zu verstehen, wobei die Temperatur während Schritt b) grundsätzlich ein- oder mehrmals im angegebenen Temperaturbereich variiert werden kann.

Unter einer Suspension ist im Rahmen der vorliegenden Erfindung ein heterogenes Stoffgemisch aus einer Flüssigkeit und darin fein verteilten Feststoffen zu verstehen. In Abhängigkeit des zugegebenen Calcium-Salzes kann dieses zunächst zerkleinert werden. Rotschlamm selbst liegt üblicherweise bereits in feindisperser Form vor und kann grundsätzlich ohne weitere Verfahrensschritte verwendet werden. In Abhängigkeit der Zusammensetzung des Rotschlamms und des Calcium-Salzes kann in Schritt a) vorgesehen sein, dass der Rotschlamm zunächst homogenisiert und gegebenenfalls durch Zugabe entsprechender Flüssigkeitsmengen in einen pumpfähigen und/oder stichfesten Zustand gebracht wird. Weiterhin kann vorgesehen sein, dass das Calcium-Salz zunächst in einer entsprechenden Flüssigkeitsmenge gelöst und/oder suspendiert wird. Grundsätzlich können der Rotschlamm und/oder das Calcium-Salz zunächst getrennt voneinander erwärmt und anschließend im erwärmten Zustand miteinander gemischt werden. Beispielsweise kann der Rotschlamm zunächst mit Wasser versetzt, auf 50°C erwärmt und anschließend mit dem gelösten und/oder aufgeschlämmten Calcium-Salz vermischt werden.

Die Reaktion kann im Unterschied zum Stand der Technik grundsätzlich ohne Zusatz von Huminsäure bzw. Huminsäure-Derivaten und damit huminsäurefrei durchgeführt werden, wodurch erhebliche Kostensparungen entstehen.

Die Erfindung basiert dabei auf der Erkenntnis, dass im Temperaturbereich zwischen 42°C und 55°C eine Tonbildung erfolgt, indem die im Rotschlamm enthaltenen Minerale mit Calcium unter Mineralneubildung zu einem quelltonartigen Calcium-Aluminat-Tonschlamm reagieren. Als Produkte überwiegend Calcium- und Natrium-Aluminate, die aus den im Rotschlamm enthaltenen Aluminiumverbindungen gebildet werden, sowie Goethit, der aus den im Rotschlamm enthaltenen Eisenoxiden und -hydroxiden gebildet wird. Die dabei ablaufenden Hauptreaktionen sind die Bildung von Katoid:

3 Ca(OH)₂ + 2 Al₂O₃ + 3 H₂O -> Ca₃AL₂[(OH)₄]₃

sowie die Umwandlung von Hämatit in Goethit:

Fe₂O₃ + H₂O -> 2 FeO(OH).

Die Reaktion geht aufgrund der Umwandlung von Hämatit mit einer Farbänderung von rot nach gelb/braun einher. Dabei kommt es im Unterschied zum Stand der Technik zu einer Freisetzung von elektrostatisch an Fe- und Al-Mineralien gebundener NaOH, die somit praktisch quantitativ abgetrennt werden kann. Der im Rotschlamm vorhandene Alkali-Anteil wird somit nicht zusätzlich gebunden, sondern kann in Form von Natronlauge zusammen mit den Calcium-/Natrium-Aluminaten - beispielsweise durch Abpressen - schnell, einfach und praktisch quantitativ von den übrigen, im Wesentlichen eisenhaltigen Reaktionsprodukten abgetrennt werden. Die Aluminat-Ausbeute kann - wie aus der Reaktionsgleichung ersichtlich - über die zugegebene Calcium-Menge gesteuert werden. Durch Zugabe geringerer Calcium-Mengen kann eine höhere Eisenerz-Ausbeute erzielt werden. Zusätzlich oder alternativ zu Rotschlamm kann die Reaktion auch mit Bauxit oder sonstigen eisenhaltigen Erzen durchgeführt werden.

Bei Temperaturen unterhalb von 42°C entsteht der gewünschte Calcium-Aluminat-Tonschlamm nicht bzw. nicht in wirtschaftlich akzeptablen Geschwindigkeiten und Ausbeuten. Das Verfahren bzw. die einzelnen Verfahrensschritte können dabei grundsätzlich kontinuierlich und/oder diskontinuierlich durchgeführt werden.

In einer vorteilhaften Ausgestaltung der Erfindung ist vorgesehen, dass in Schritt a) ein pH-Wert der Suspension auf mindestens 10, insbesondere auf mindestens 12, eingestellt und/oder ein Gewichtsverhältnis zwischen dem Rotschlamm und dem Wasser auf einen Wert zwischen 0,8 und 1,2 eingestellt wird. Hierdurch wird eine besonders hohe Ausbeute der vorstehend genannten Reaktionsprodukte erzielt.

In einer weiteren vorteilhaften Ausgestaltung der Erfindung ist vorgesehen, dass in Schritt a) ein Gewichtsverhältnis zwischen dem Calcium-Salz und dem Rotschlamm auf einen Wert von mindestens 0,15, insbesondere von mindestens 0,20, und/oder ein Molverhältnis zwischen Calcium und Aluminium auf einen Wert zwischen 1,6 und 2,0, insbesondere auf 1,8, eingestellt wird. Hierdurch werden besonders hohe Umsatzraten und Ausbeuten erzielt.

In einer weiteren vorteilhaften Ausgestaltung der Erfindung ist vorgesehen, dass die Suspension in Schritt b) zwischen 10 Minuten und 6 Stunden, insbesondere zwischen 30 Minuten und 2 Stunden und vorzugsweise zwischen 1 Stunde und 2 Stunden, erwärmt wird. Auf diese Weise kann eine möglichst vollständige Umsetzung der Edukte sichergestellt werden.

In einer weiteren vorteilhaften Ausgestaltung der Erfindung ist vorgesehen, dass die flüssige Phase in Schritt c) zumindest überwiegend und/oder mittels einer Filterpresse und/oder mittels einer Kammerfilterpresse und/oder mittels eines Separators vom festen Produktgemisch abgetrennt wird. Hierdurch kann der ursprünglich im Rotschlamm vorhandene Alkali-Anteil zusammen mit den in der flüssigen Phase gelösten Calcium-/Natrium-Aluminaten besonders einfach, schnell und praktisch quantitativ von den festen Reaktionsprodukten, die den Calcium-Aluminat-Tonschlamm (CATO) umfassen, abgetrennt werden. Das feste Produktgemisch verfügt dabei über eine besonders große reaktive Oberfläche und kann in vielfältiger Weise weiterverwendet werden.

Das in Schritt c) abgetrennte Produktgemisch kann getrocknet und/oder als Filterelement, insbesondere zum Filtrieren von Pflanzenöl und/oder von verschmutztem Wasser, und/oder als Eisen- bzw. Eisenkalk-Bodenverbesserer und/oder als Klärungsmittel und/oder als Zementzusatz und/oder als Baustoff und/oder als Mineraldünger verwendet werden. Mit Hilfe des abgetrennten Produktgemischs kann beispielsweise rohes Pflanzenöl aus Pressung von Ölpflanzen raffiniert und von unerwünschten organischen Bestandteilen befreit werden. Aufgrund seiner hohen spezifischen Oberfläche eignet sich das Produktgemisch zum Filtrieren von verschmutztem Wasser, wobei über einen Restalkaligehalt insbesondere saure Gewässer gleichzeitig neutralisiert werden können. Alternativ kann das Produktgemisch vielfältig als Bodenverbesserer, Klärungsmittel, Zementzusatz, Baustoff und/oder als Mineraldünger verwendet werden. Dabei kann vorgesehen sein, dass das Produktgemisch mit Holzkohlestaub vermischt wird, wodurch ein Schwarzerde-ähnliches (Terra preta) Gemisch erhältlich ist, welches einen sehr fruchtbaren, einem guten europäischen Ackerboden ebenbürtigen Boden darstellt. Auf diese Weise kann mit Hilfe des bislang als Abfall angesehenen Rotschlamms eine nachhaltige Landwirtschaft in der Regenfeldbauzone und in anderen Klimazonen gefördert werden.

In einer weiteren vorteilhaften Ausgestaltung der Erfindung ist vorgesehen, dass die in Schritt c) abgetrennte flüssige Phase entwässert und/oder mit CO₂ versetzt und/oder zur Rückgewinnung wenigstens einer Aluminium-Verbindung, insbesondere von Al(OH)₃, mit einem Alkalicarbonat, insbesondere mit Soda und/oder Trona, versetzt wird und/oder zum Durchführen eines Bayer-Verfahrens und/oder zur Abwasserbehandlung und/oder zur Rückgewinnung von Alkalilauge verwendet wird. Auch hierdurch ist eine umfassende Wertstoffgewinnung mit Hilfe von Rotschlamm ermöglicht. Durch Versetzen der flüssigen Phase, welche Calcium-/Natrium-Aluminatlauge umfasst, mit CO₂ erhält man über eine Carbonatbildung Soda (Na₂CO₃) und Kalk (CaCO₃) als Wertstoffe. Da hierbei erhebliche Mengen an CO₂ gebunden werden können, können zudem Schadstoffemissionen mit möglichst geringen volkswirtschaftlichen Kosten verringert werden ("Carbon Sequestration"). Alternativ oder zusätzlich kann die flüssige Phase mit einem Alkalicarbonat (z.B. Soda und/oder Trona) versetzt werden, wodurch insbesondere Al(OH)₃ zurückgewonnen und in den Bayer-Prozess rückgeführt werden kann. Weiterhin kann zumindest ein Teil der in der flüssigen Phase vorhandenen Natronlauge zurückgewonnen und ebenfalls in den Bayer-Prozess rückgeführt und/oder beispielsweise in Schritt a) mit Rotschlamm und/oder dem Calcium-Salz vermischt werden, um die Viskosität und/oder den pH-Wert einzustellen.

In einer weiteren vorteilhaften Ausgestaltung der Erfindung ist vorgesehen, dass als Biomasse Holz, Hackschnitzel, Rinde, Stroh, Bagasse, Blattmasse, Pflanzenabfälle, Gras, Laub, Dung, Pflanzenöl, Klärschlamm, Gülle, organischer Hausmüll und/oder Sägespäne verwendet wird. Hierdurch ist eine Biomassevergasung mit entsprechender Wertstoffgewinnung ermöglicht.

In einer weiteren vorteilhaften Ausgestaltung der Erfindung ist vorgesehen, dass das in Schritt c) abgetrennte und gegebenenfalls in Schritt d) mit Biomasse vermischte Produktgemisch in einem weiteren Schritt e), vorzugsweise unter Sauerstoffabschluss, auf eine Temperatur zwischen 280°C und 400°C erwärmt wird. Mit Hilfe des in der vorstehend genannten Weise hergestellten Produktgemischs, welches im Rahmen der hierbei ablaufenden Reaktionen katalytische Eigenschaften aufweist, kann somit eine Biomassevergasung bei besonders niedrigen Temperaturen durchgeführt werden. Demgegenüber müssen aus dem Stand der Technik bekannte Biomassevergasungen bei Temperaturen von mindestens 750°C-800°C durchgeführt werden. Ein weiterer wesentlicher Unterschied besteht darin, dass die Biomassevergasung trotz der niedrigen Temperaturen von höchsten 450°C aufgrund der katalytischen Eigenschaften des Produktgemisches teerfrei und ohne nennenswerte Carbonsäurebildung (insbes. ohne Essigsäure- und Ameisensäurebildung) abläuft. Bei aus dem Stand der Technik bekannten Biomassevergasungs-Verfahren entstehen demgegenüber selbst bei wesentlich höheren Temperaturen üblicherweise große Teermengen, die zu verschiedenen erheblichen Problemen führen.

Bei der Pyrolyse im Niedertemperaturbereich erfolgt eine Reduktion und Oxidneubildung der mineralischen Bestandteile, eine Carbonatbildung bei Mineralien in der CO₂-Atmosphäre (30%) und eine Zersetzung der organischen Holzbestandteile (Zellulose + Hemizellulose) in Gegenwart des heterogenen Katalysators (umfassend: Fe-, K- und Ti-Ionen). Wichtige ablaufende Reaktionen können schematisch mit folgenden beispielhaften Reaktionsgleichungen erläutert werden:

Ca₃AL₂[(OH)₄]₃

(Katoid) bleibt unzersetzt;

2 FeO(OH) -> Fe₂O₃ (Fe₃O₄)+ H₂O

(Goethit reagiert zu Maghemit und/oder Magnetit)

NaOH + CO₂ -> Na₂CO₃

SiO₂ + NaOH + CO₂ -> Na-Silikate

Holz- bzw. Biomassevergasung:

C₅₀H₆O₄₃ + n H₂O -> CO (30%) + H₂ (30%) + CHₙ (10%) (exotherm)

("C₅₀H₆O₄₃" entspricht dabei einer durchschnittlichen Holz-Zusammensetzung und dient lediglich der Veranschaulichung)

In einer weiteren vorteilhaften Ausgestaltung der Erfindung ist vorgesehen, dass nach dem Erwärmen gemäß Schritt e) wenigstens ein gasförmiges Reaktionsprodukt von wenigstens einem festen Reaktionsprodukt und/oder wenigstens ein magnetisches Reaktionsprodukt, vorzugsweise mittels eines nassmagnetischen Trennverfahrens, von wenigstens einem nicht-magnetischen Reaktionsprodukt abgetrennt wird. Auf diese Weise können verschiedene Wertstoffe gewonnen werden. Eine Trennung kann beispielsweise auch in einem Sedimenter durch Separation der schnell absinkenden Mineralien mit hoher Dichte (Eisenmineral > 5g/cm³; Silikate, Titandioxid, Kalkminerale ∼ 3g/cm³) durchgeführt werden.

In einer weiteren vorteilhaften Ausgestaltung der Erfindung ist vorgesehen, dass ein gasförmiges Reaktionsprodukt abgetrennt wird, welches CO und/oder H₂ und/oder CH₄ umfasst, und/oder dass ein magnetisches Reaktionsprodukt abgetrennt wird, welches Magnetit und/oder Maghemit umfasst, und/oder dass ein nicht-magnetisches Reaktionsprodukt abgetrennt wird, welches Kohle und/oder wenigstens ein Silikat und/oder wenigstens ein Carbonat und/oder eine Aluminiumverbindung umfasst. Als gasförmiges Reaktionsprodukt kann unter anderem Schwachgas und/oder Generatorgas (mit ca. 40% H₂, 40% CO und 20% CH₄) und/oder Wasserdampf gewonnen werden. Der Wasserdampf kann wiederum zur Energiegewinnung und/oder zum Erwärmen des in Schritt a) erzeugten Gemisches in Schritt b) verwendet werden, so dass das Verfahren autotherm durchgeführt werden kann. Als festes, nicht-magnetisches Reaktionsprodukt kann je nach den vorhergehenden Verfahrensschritten beispielsweise Holzkohle aus der Biomassevergasung gewonnen werden. Als magnetisches Reaktionsprodukt kann insbesondere ein Magnetit/Maghemit umfassendes Eisenerz und als nicht-magnetischen Reaktionsprodukt ein Eisenerz-Kalk-Dünger gewonnen werden.

In einer weiteren vorteilhaften Ausgestaltung der Erfindung ist vorgesehen, dass das gasförmige Reaktionsprodukt zum Durchführen eines Fischer-Tropsch-Verfahrens und/oder eines Gas-to-Liquids-Verfahrens und/oder dass das magnetische Reaktionsprodukt zur Herstellung von metallischem Eisen und/oder einer Eisenlegierung und/oder dass das nicht-magnetische Reaktionsprodukt als Mineraldünger und/oder zum Durchführen eines Bayer-Verfahrens verwendet wird. Hierdurch ist eine besonders umfassende Wertstoffgewinnung aus dem bislang als Abfall angesehenen Rotschlamm ermöglicht, die ohne die erfindungsgemäßen Verfahrensschritte nicht möglich war. Das Verfahren kann dabei problemlos für eine Schwach-, Generator- und/oder Synthesegas-Herstellung optimiert werden. Die gasförmigen Produkte können ihrerseits in an sich bekannter Weise zur nachfolgenden Herstellung von Methanol, Fischer-Tropsch- und/oder Gas-to-Liquids-Produkten genutzt werden.

Das in Schritt c) abgetrennte Produktgemisch kann in einem weiteren Schritt f) mit Pflanzenöl und einem Lösungsmittel vermischtwerden. Hierdurch sind verschiedene Treibstoffe bzw. Dieselsubstitute (z.B. Biodiesel, Winter-Biodiesel und dgl.) einfach und kostengünstig zugänglich.

Als Lösungsmittel kann Wasser und/oder ein bei Standardbedingungen flüssiger substituierter oder unsubstituierter Kohlenwasserstoff, insbesondere Hexan und/oder Toluol, verwendet werden. Auf diese Weise können polare und/oder unpolare bzw. überwiegend unpolare Verbindungen wie Glycerin, Fettsäuren oder Ester zumindest weitestgehend vom stark polaren Produktgemisch abgetrennt und zurückgewonnen werden. Gegebenenfalls kann der Waschschritt dabei mehrmals wiederholt werden. Der Kohlenwasserstoff kann zusammen mit den in ihm gelösten unpolaren bzw. überwiegend unpolaren Verbindungen abgetrennt, in einem weiteren Verfahrensschritt in einem Verdampfer von diesen abgezogen bzw. abdestilliert und für die erneute Nutzung zurückgeführt werden. Anstelle von Hexan können dabei auch andere unpolare Lösungsmittel wie Pentan, Heptan oder Toluol verwendet werden, wobei der Erfindungsgedanke nicht auf diese Verbindungen beschränkt ist.

Die in Schritt f) erzeugte Mischung kann in einem weiteren Schritt g) auf eine Temperatur zwischen 30°C und 80°C, insbesondere auf eine Temperatur zwischen 40°C und 70°C, erwärmt werden. Hierdurch wird eine schnelle und wirtschaftliche Umsetzung des Pflanzenöls sichergestellt.

Nach dem Erwärmen gemäß Schritt g) kann wenigstens ein flüssiges, Biodiesel umfassendes Reaktionsprodukt, vorzugsweise mittels eines Separators, vom Produktgemisch abgetrennt werden. Hierdurch wird ein Treibstoff bzw. ein Dieselsubstitut (z.B. Biodiesel, Winter-Biodiesel und dgl.) einfach und kostengünstig erhalten.

Das Lösungsmittel kann nach dem Erwärmen gemäß Schritt g) vom Produktgemisch abgetrennt und erneut als Lösungsmittel in Schritt f) verwendet werden. Auf diese Weise kann das betreffende Lösungsmittel in einem geschlossenen Kreislauf weitgehend verlustfrei und betriebskostensenkend zirkulieren und mehrfach wieder verwendet werden.

Nach dem Erwärmen gemäß Schritt g) kann wenigstens ein festes Reaktionsprodukt vom Produktgemisch abgetrennt und zu dem in Schritt c) abgetrennten Produktgemisch zugegeben werden. Hierdurch können insbesondere die im festen Reaktionsprodukt enthaltenen Eisen-Verbindungen rückgewonnen werden.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine Prinzipdarstellung einer Vorrichtung zum Durchführen eines Verfahrens zum Verwerten von Rotschlamm;
- Fig. 2: ein Ablaufdiagramm eines weiteren Ausführungsbeispiels des erfindungsgemäßen Verfahrens; und
- Fig. 3: ein Ablaufdiagramm eines weiteren Ausführungsbeispiels des erfindungsgemäßen Verfahrens.

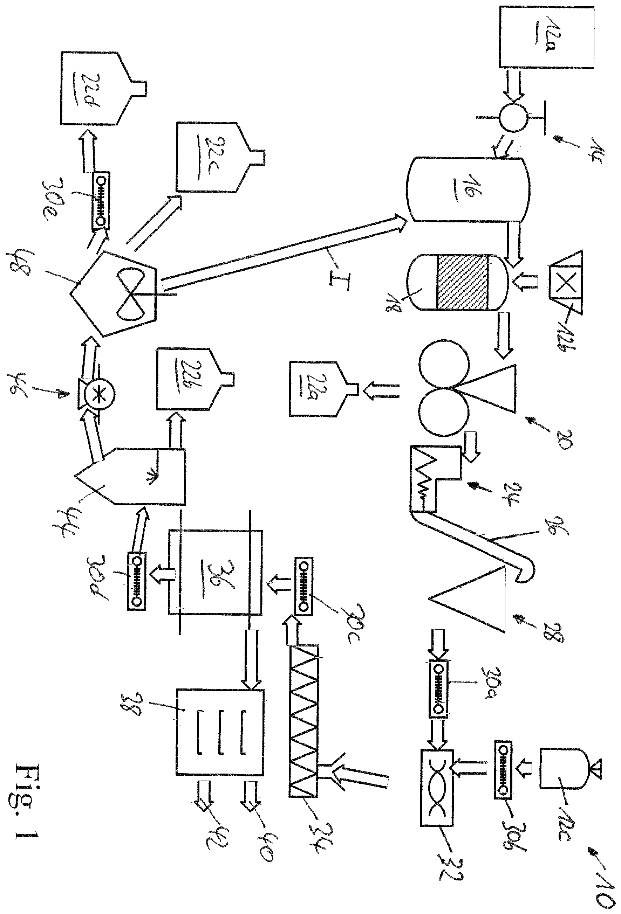

Fig. 1 zeigt eine Prinzipdarstellung einer Vorrichtung 10 zum Durchführen eines Verfahrens zum Verwerten von Rotschlamm. Die

Vorrichtung 10 umfasst einen Vorratsbehälter 12a zum Lagern des Rotschlamms. Vom Vorratsbehälter 12 aus wird der Rotschlamm in stichfester Konsistenz über eine als Schneckenwaage ausgebildete Wiege- und Transporteinrichtung 14 mit einer einstellbaren Durchsatzmenge von 160-250 kg/h in einen Konditionierer 16 gefördert und dort mit Wasser und Natronlauge versetzt, die gemäß Pfeil I aus späteren Verfahrensschritten rückgeführt wird. Dabei wird ein pH-Wert des Rotschlamms auf mindestens 10, insbesondere auf mindestens 12, eingestellt, wobei ein Gewichtsverhältnis zwischen dem Rotschlamm und dem Wasser auf einen Wert zwischen 0,8 und 1,2, insbesondere auf etwa 1,0, eingestellt wird. Aus dem Konditionierer 16 wird der Rotschlamm in einen Reaktor 18 gepumpt und mit Branntkalk versetzt, wodurch eine wässrige Suspension entsteht, die Rotschlamm und Calcium-Salz umfasst. Der Branntkalk wird dabei in einem weiteren Vorratsbehälter 12b gelagert und in derartigen Mengen in den Reaktor 18 gefördert, dass ein Gewichtsverhältnis zwischen dem Calcium-Salz und dem Rotschlamm auf einen Wert von mindestens 0,15, insbesondere von mindestens 0,20, bzw. ein Molverhältnis zwischen Calcium und Aluminium auf einen Wert zwischen 1,6 und 2,0, insbesondere auf 1,8, eingestellt wird.

Die Suspension wird im Reaktor 18 für eine Zeitdauer zwischen 20 Minuten und etwa 4 Stunden auf eine Temperatur zwischen 42°C und 55°C erwärmt. Dabei entsteht in der festen Phase ein eisenreicher Calcium-Aluminat-Tonschlamm (CATO), während in der flüssigen Phase Calcium-/Natrium-Aluminate gebildet werden. Die Farbe der Suspension wechselt während der Reaktion von rot nach gelb/braun. Weiterhin nimmt die Viskosität zu, da Wasser als Kristallwasser verschiedener Salze eingebunden wird.

Nach Ablauf der Reaktionszeit wird das entstandene Produktgemisch aus dem Reaktor 18 in eine als Kammerfilterpresse ausgebildete Abtrenneinrichtung 20 überführt, in welcher die flüssige Phase zumindest weitgehend von der festen Phase abgetrennt wird. Die flüssige Phase, welche die Calcium-/Natrium-Aluminat-Lauge (Zusammensetzung ca. 96% NaOH, 1,8% Al₂0₃, 1,2% Si0₂) umfasst, wird als Wertstoff in einem Auffangbehälter 22a aufgefangen. Die Abtrenneinrichtung 20 ist dabei ausgelegt, zwischen 200 l/h und 400 l/h an flüssiger Phase abzutrennen.

Der Filterkuchen mit dem festen Produktgemisch wird über einen Grobzerkleinerer 24 und ein Transportband 26 in einen Feinzerkleinerer 28 transportiert und in Partikel mit Durchmessern von etwa 2,0 bis 2,5 mm zerkleinert. Über eine als Zellradschleuse ausgebildete Transporteinrichtung 30a wird das Tonmineralgemisch mit einer Temperatur von weniger als 65°C und einer Durchsatzrate zwischen 200 1/h und 400 1/h in eine als Doppelwellenmischer ausgebildete Mischeinrichtung 32 transportiert und mit Hackschnitzeln vermischt. Die Hackschnitzel werden in einem weiteren Vorratsbehälter 12c gelagert und ebenfalls mit einer als Zellradschleuse ausgebildeten Transporteinrichtung 30b mit einer Temperatur von weniger als 65°C und einer Durchsatzrate zwischen 200 kg/h und 400 kg/h in die Mischeinrichtung 32 transportiert.

Über eine als Förderschnecke ausgebildete Transporteinrichtung 34 und eine weitere als Zellradschleuse ausgebildete Transporteinrichtung 30c werden das Produktgemisch und die Hackschnitzel mit einer Temperatur von etwa 105°C in einen vorzugsweise durchlauffähigen Biomassevergaser 36 gefüllt und, vorzugsweise unter Sauerstoffabschluss, auf eine Temperatur zwischen 250°C und 450°C, insbesondere zwischen 280°C und 400°C, erwärmt. Die Biomassevergasung kann grundsätzlich kontinuierlich und/oder diskontinuierlich durchgeführt werden. Bei der Biomassevergasung laufen verschiedene Reduktionen, Oxidneubildungen und Zersetzungen der organischen Holzbestandteile (Zellulose, Hemizellulose etc.) in Gegenwart des heterogenen Katalysators (katalytisch insbesondere wirksam: Fe-, K- und Ti-Ionen) ab. Aufgrund des CO₂-Gehalts der Reaktionsatmosphäre kommt es zudem zu einer Carbonatbildung.

Als gasförmige Reaktionsprodukte entstehen Generatorgas (mit einer Zusammensetzung von etwa 40% H₂, 40% CO und 40% CH₄), CO₂ und Wasserdampf. Die Ausbeute der gasförmigen Produkte liegt dabei regelmäßig bei etwa 70% der eingesetzten Hackschnitzel-Trockensubstanz. Das Generatorgas wird abgetrennt und einem Blockheizkraftwerk 38 zugeführt, mittels welchem elektrischer Strom 40 und Prozesswärme 42 gewonnen wird. Dies erlaubt es, das gesamte Verfahren autotherm bzw. die gesamte Vorrichtung 10 autark zu betreiben.

Die festen Reaktionsprodukte der Biomassevergasung umfassen im Wesentlichen Holzkohle, Eisenminerale, Silikate, Titandioxid und Kalkminerale. Die Holzkohleausbeute liegt regelmäßig bei etwa 30%-40% der eingesetzten Hackschnitzel-Trockensubstanz. Es ist dabei zu betonen, dass die Biomassevergasung aufgrund der reaktionsfördernden Eigenschaften des CATO sowohl bei diesen niedrigen Temperaturen als auch praktisch teerfrei abläuft. Die festen Reaktionsprodukte werden mit einer Temperatur unterhalb von 320°C und einer Rate zwischen 200 kg/h und 400 kg/h über eine weitere als Zellradschleuse ausgebildete Transporteinrichtung 30d in einen mit Wasser befüllten bzw. befüllbaren Abschreckbehälter 44 transportiert. Über eine Dichtetrennung kann die leichte Holzkohle abgetrennt und in einem Auffangbehälter 22b gesammelt werden. Die schwereren Mineralstoffe werden über eine als Schneckenpumpe ausgebildete Transporteinrichtung 46 in einen Sedimenter 48 gefördert, in welchem einem Abtrennung und Rückführung von Natronlauge (Pfeil I) sowie eine Dichtetrennung der Mineralstoffe in eine leichtere Fraktion mit einer Dichte von etwa 3 g/cm³ und eine schwerere Fraktion mit einer Dichte von etwa 5 g/cm³ stattfindet. Die leichtere Fraktion wird in einen weiteren Auffangbehälter 22c transportiert und umfasst ein als Eisenkalk-Mineraldünger verwendbares Mineralgemisch, das im Wesentlichen aus Silikaten, Titandioxid und Kalkmineralen besteht. Dieses Mineralgemisch kann gegebenenfalls mit Holzkohlepulver zu Terra Preta weiterverarbeitet werden, wobei das Holzkohlepulver natürlich aus der Biomassevergasung gewonnen werden kann. Die schwerere Fraktion wird über eine weitere als Zellradschleuse ausgebildete Transporteinrichtung 30e in einen weiteren Auffangbehälter 22d transportiert und umfasst im Wesentlichen Eisenerz.

Somit stellen alle Endprodukte des Verfahrens Wertstoffe dar, die umweltneutral aus dem bislang als Abfallstoff angesehenen Rotschlamm erhältlich sind.

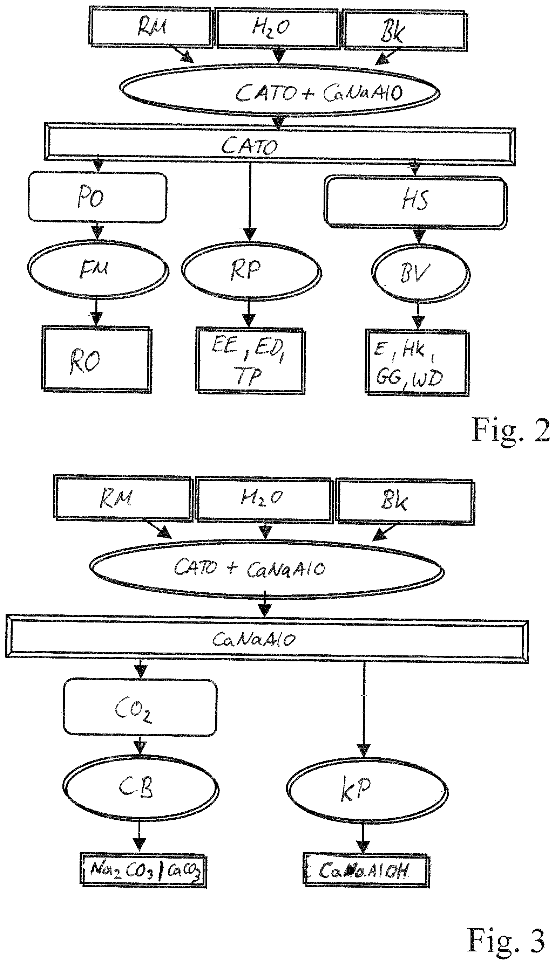

Fig. 2 zeigt ein Ablaufdiagramm eines weiteren Ausführungsbeispiels des erfindungsgemäßen Verfahrens. Zunächst wird dabei eine wässrige Suspension aus Rotschlamm (RM), Wasser (H₂O) und Branntkalk (BK) als Calcium-Salz hergestellt und auf eine Temperatur zwischen 42°C und 55°C erwärmt. Hierbei wird das vorstehend erläuterte Produktgemisch aus festem, eisenreichen Calcium-Aluminat-Tonschlamm (CATO) und flüssiger Ca-/Na-Aluminatlauge (CaNaAlO) gebildet. Der CATO wird anschließend von der wässrigen Phase abgetrennt.

In einem ersten Verfahrenszweig wird der gewonnene CATO mit einem Pflanzenöl (PO) - z.B. Sojaöl, Jatrophaöl und dergleichen - versetzt und als Filtermasse (FM) verwendet. Hierdurch können raffinierte Öle (RO) - auch Bioöle - sowie Treibstoff- und Dieselsubstitute als Wertstoffe erhalten werden.

In einem zweiten Verfahrenszweig wird der CATO einem Reduktionsprozess (RP) unterworfen, wodurch Eisenerz (EE), Eisenkalk-Dünger (ED) und - nach Vermischen des Eisenkalk-Düngers mit Holzkohlestaub - Terra Preta (TP) zugänglich sind.

In einem dritten Verfahrenszweig wird der CATO - wie vorstehend beschrieben - mit Hackschnitzeln (HS) vermischt und zur Biomassevergasung (BV) verwendet. Hierdurch ist Energie (E) in Form von elektrischem Strom und/oder Prozesswärme, teerfreie Holzkohle (HK), Generatorgas (GG) und Wasserdampf (WD) erhältlich. Alternativ oder zusätzlich kann das Generatorgas mit den entsprechenden Vorteilen zum Durchführen eines Fischer-Tropsch-Verfahrens und/oder eines Gas-to-Liquids-Verfahrens verwendet werden.

Fig. 3 zeigt ein Ablaufdiagramm eines weiteren Ausführungsbeispiels des erfindungsgemäßen Verfahrens. Zunächst wird analog dem vorhergehenden Ausführungsbeispiel eine wässrige Suspension aus Rotschlamm (RM), Wasser (H₂O) und Branntkalk (BK) als Calcium-Salz hergestellt und auf eine Temperatur zwischen 42°C und 55°C erwärmt. Hierbei wird das vorstehend erläuterte Produktgemisch aus festem, eisenreichen Calcium-Aluminat-Tonschlamm (CATO) und flüssiger Ca-/Na-Aluminatlauge (CaNaAlO) gebildet. Im vorliegenden Ausführungsbeispiel wird die Ca-/Na-Aluminatlauge anschließend von der festen Phase, d.h. vom CATO, abgetrennt.

In einem ersten Verfahrenszweig wird die Ca-/Na-Aluminatlauge mit CO₂ versetzt, wodurch eine Carbonatbildung (CB) initiiert wird. Hierdurch werden Soda (Na₂CO₃) und Kalk (CaCO₃) als Wertstoffe erhalten. Das CO₂ kann dabei beispielsweise aus der vorstehend beschriebenen Biomassevergasung stammen, wodurch das Verfahren besonders wirtschaftlich und umweltneutral durchgeführt werden kann.

In einem zweiten Verfahrenszweig wird die Ca-/Na-Aluminatlauge aufkonzentriert (KP), wodurch eine konzentrierte Ca-/Na-Aluminatlauge (CaNaAlOH) mit anwendungsspezischen Eigenschaften erhältlich ist. Die Ca-/Na-Aluminatlauge kann beispielsweise wieder im Rahmen des Bayer-Verfahrens eingesetzt werden, wodurch die ansonsten anfallenden Kosten für die Herstellung dieser Lauge entfallen.

In einem weiteren Ausführungsbeispiel werden mit Hilfe einer auf eine Durchsatzmenge von 100000 t/a Rotschlamm ausgelegten Vorrichtung 10 aus:
- 100000 t/a Rotschlamm;
- 20000 t/a Branntkalk;
- 40000 t/a Hackschnitzel (35% Wasseranteil); und
- 50000 t/a Wasser
   in der vorstehend beschriebenen Weise
- 56400 t/a Eisenerze;
- 58800 t/a Eisenkalk-Mineraldünger;
- 38100 t/a Ca-/Na-Aluminatlauge
- 7280 t/a Holzkohle;
- 13104 t/a Generatorgas;
- 5616 t/a CO₂; und
- 30700 t/a Wasserdampf
gewonnen.

In einem weiteren Ausführungsbeispiel werden aus:
- 330 t CATO; und
- 1000 t Pflanzenöl
   in der vorstehend beschriebenen Weise
- 900-930 t raffiniertes Öl; und
- 430-400 t mit organischen Restverbindungen versetzter CATO gewonnen. Das Pflanzenöl stammt beispielsweise aus der Pressung von Ölpflanzen. Das Mischungsverhältnis von CATO zu rohem Pflanzenöl beträgt üblicherweise etwa 1:3. Der mit Resten organischer Pflanzenölanteilen versetzte CATO kann anschließend analog der Verarbeitung von Holzschnitzeln in der vorstehend beschriebenen Weise zu den entsprechenden Rohstoffen/Mineralien umgesetzt werden. Der organischen Pflanzenölanteile können in Generatorgas umgewandelt und anschließend zur Gewinnung von elektrischem Strom (20%) und Prozesswärme (80%) verwendet werden.

Zusammenfassend liefert Rotschlamm als Ausgangsstoff mit Hilfe des erfindungsgemäßen Verfahrens bzw. mit Hilfe der Vorrichtung 10 unter anderem:
- einen billigen Katalystor zum Cracken von organischen Kohlenstoffverbindungen;
- Eisenerze, Eisen-Titanerze und "Fine ore" für die Eisenverhüttung;
- Holzkohle und Generatorgas, die beispielsweise in Blockheizkraftwerken zur Gewinnung von elektrischem Strom und Prozesswärme genutzt werden können;
- Eisenkalk-Mineral-Dünger und Terra Preta als Bodenverbesserer zur Neutralisierung saurer Böden sowie zur Agrarlandgewinnung;
- Natronlauge und Aluminatlauge, die als Desinfektions- oder Reinigungsmittel, als Klärhilfsstoff oder zur Abwasserreinigung in der Chemischen Industrie, in Brauereien, in der Aluminium-Industrie und dergleichen verwendbar sind;
- Tonmineralien und Silikate, die als Ziegelbaustoff, Zuschlagstoff für den Straußenbau, zur Kunststoff-Faser-Herstellung, als Dichtungsmassen und dergleichen in der Baustoffindustrie verwendbar sind; und
- Generierung von CO₂-Zertifikaten, indem CO₂ in Form von Soda und/oder Kalk gebunden wird.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Verwerten von Rotschlamm, bei welchem zumindest folgende Schritte durchgeführt werden:
a) Herstellen einer wässrigen Suspension, welche Rotschlamm und zumindest ein Calcium-Salz umfasst;
b) Erwärmen der Suspension auf eine Temperatur zwischen 42°C und 55°C; und
c) Abtrennen wenigstens eines Teils einer wässrigen Phase vom einem festen, in Schritt b) erzeugten Produktgemisch;
d) Vermischen des in Schritt c) abgetrennte Produktgemischs mit Biomasse; und
e) Erwärmen des in Schritt d) mit Biomasse vermischten Produktgemischs auf eine Temperatur zwischen 250°C und 450°C.

2. Verfahren nach Anspruch 1,
**dadurch gekennzeichnet, dass**
in Schritt a) ein pH-Wert der Suspension auf mindestens 10, insbesondere auf mindestens 12, eingestellt und/oder ein Gewichtsverhältnis zwischen dem Rotschlamm und dem Wasser auf einen Wert zwischen 0,8 und 1,2 eingestellt wird.

3. Verfahren nach Anspruch 1 oder 2,
**dadurch gekennzeichnet, dass**
in Schritt a) ein Gewichtsverhältnis zwischen dem Calcium-Salz und dem Rotschlamm auf einen Wert von mindestens 0,15, insbesondere von mindestens 0,20, und/oder ein Molverhältnis zwischen Calcium und Aluminium auf einen Wert zwischen 1,6 und 2,0, insbesondere auf 1,8, eingestellt wird.

4. Verfahren nach einem der Ansprüche 1 bis 3,
**dadurch gekennzeichnet, dass**
die Suspension in Schritt b) zwischen 10 Minuten und 6 Stunden, insbesondere zwischen 30 Minuten und 2 Stunden, vorzugsweise zwischen 1 Stunde und 2 Stunden, erwärmt wird.

5. Verfahren nach einem der Ansprüche 1 bis 4,
**dadurch gekennzeichnet, dass**
die flüssige Phase in Schritt c) zumindest überwiegend und/oder mittels einer Filterpresse und/oder mittels einer Kammerfilterpresse und/oder mittels eines Separators vom festen Produktgemisch abgetrennt wird.

6. Verfahren nach einem der Ansprüche 1 bis 5,
**dadurch gekennzeichnet, dass**
die in Schritt c) abgetrennte flüssige Phase entwässert und/oder mit CO₂ versetzt und/oder zur Rückgewinnung wenigstens einer AluminiumVerbindung, insbesondere von Al(OH)₃, mit einem Alkalicarbonat, insbesondere mit Soda und/oder Trona, versetzt wird und/oder zum Durchführen eines Bayer-Verfahrens und/oder zur Abwasserbehandlung und/oder zur Rückgewinnung von Alkalilauge verwendet wird.

7. Verfahren nach einem der Ansprüche 1 bis 6,
**dadurch gekennzeichnet, dass**
als Biomasse Holz, Hackschnitzel, Rinde, Stroh, Bagasse, Blattmasse, Pflanzenabfälle, Gras, Laub, Dung, Pflanzenöl, Klärschlamm, Gülle, organischer Hausmüll und/oder Sägespäne verwendet wird.

8. Verfahren nach einem der Ansprüche 1 bis 7,
**dadurch gekennzeichnet, dass**
das in Schritt d) mit Biomasse vermischte Produktgemisch in Schritt e) unter Sauerstoffabschluss und/oder auf eine Temperatur zwischen 280°C und 400°C erwärmt wird.

9. Verfahren nach Anspruch 8,
**dadurch gekennzeichnet, dass**
nach dem Erwärmen gemäß Schritt e) wenigstens ein gasförmiges Reaktionsprodukt von wenigstens einem festen Reaktionsprodukt und/oder wenigstens ein magnetisches Reaktionsprodukt, vorzugsweise mittels eines nassmagnetischen Trennverfahrens, von wenigstens einem nicht-magnetischen Reaktionsprodukt abgetrennt wird.

10. Verfahren nach Anspruch 9,
**dadurch gekennzeichnet, dass**
ein gasförmiges Reaktionsprodukt abgetrennt wird, welches CO und/oder H₂ und/oder CH₄ umfasst, und/oder dass ein magnetisches Reaktionsprodukt abgetrennt wird, welches Magnetit und/oder Maghemit umfasst, und/oder dass ein nicht-magnetisches Reaktionsprodukt abgetrennt wird, welches Kohle und/oder wenigstens ein Silikat und/oder wenigstens ein Carbonat und/oder eine Aluminiumverbindung umfasst.

11. Verfahren nach Anspruch 10,
**dadurch gekennzeichnet, dass**
das gasförmige Reaktionsprodukt zum Durchführen eines Fischer-Tropsch-Verfahrens und/oder eines Gas-to-Liquids-Verfahrens und/oder dass das magnetische Reaktionsprodukt zur Herstellung von metallischem Eisen und/oder einer Eisenlegierung und/oder dass das nicht-magnetische Reaktionsprodukt als Mineraldünger und/oder zum Durchführen eines Bayer-Verfahrens verwendet wird.

## Claims

1. Method for utilizing red mud, in which at least the following steps are performed:
a) producing an aqueous suspension including red mud and at least one calcium salt;
b) heating the suspension to a temperature between 42 °C and 55 °C; and
c) separating at least a part of an aqueous phase from a solid product mixture produced in step b);
d) mixing the product mixture separated in step c) with biomass; and
e) heating the product mixture mixed with biomass in step d) to a temperature between 250 °C and 450 °C.

2. Method according to claim 1,
**characterized in that**
in step a) a pH value of the suspension is adjusted to at least 10, in particular to at least 12, and/or a weight ratio between the red mud and the water is adjusted to a value between 0.8 and 1.2.

3. Method according to claim 1 or 2,
**characterized in that**
in step a) a weight ratio between the calcium salt and the red mud is adjusted to a value of at least 0.15, in particular of at least 0.20, and/or a molar ratio between calcium and aluminum is adjusted to a value between 1.6 and 2.0, in particular to 1.8.

4. Method according to any one of claims 1 to 3,
**characterized in that**
the suspension is heated between 10 minutes and 6 hours, in particular between 30 minutes and 2 hours, preferably between 1 hour and 2 hours, in step b).

5. Method according to any one of claims 1 to 4,
**characterized in that**
in step c) the liquid phase is separated from the solid product mixture at least in predominant manner and/or by means of a filter press and/or by means of a chamber filter press and/or by means of a separator.

6. Method according to any one of claims 1 to 5,
**characterized in that**
the liquid phase separated in step c) is dehydrated and/or mixed with CO₂ and/or mixed with an alkali carbonate, in particular with soda and/or trona, for recovering at least one aluminum compound, in particular Al(OH)₃, and/or is used for performing a Bayer process and/or for waste water treatment and/or for recovering alkali lye.

7. Method according to any one of claims 1 to 6,
**characterized in that**
wood, wood chips, bark, straw, bagasse, leaf mass, plant wastes, grass, foliage, manure, plant oil, sewage sludge, slurry, organic household waste and/or sawdust are used as the biomass.

8. Method according to any one of claims 1 to 7,
**characterized in that**
the product mixture mixed with biomass in step d) is heated with exclusion of oxygen and/or to a temperature between 280 °C and 400 °C in step e).

9. Method according to claim 8,
**characterized in that**
after heating according to step e), at least one gaseous reaction product is separated from at least one solid reaction product and/or at least one magnetic reaction product is separated from at least one non-magnetic reaction product preferably by means of a wet-magnetic separating method.

10. Method according to claim 9,
**characterized in that**
a gaseous reaction product is separated, which includes CO and/or H₂ and/or CH₄, and/or that a magnetic reaction product is separated, which includes magnetite and/or maghemite, and/or that a non-magnetic reaction product is separated, which includes coal and/or at least one silicate and/or at least one carbonate and/or an aluminum compound.

11. Method according to claim 10,
**characterized in that**
the gaseous reaction product is used for performing a Fischer-Tropsch process and/or a gas-to-liquids process and/or that the magnetic reaction product is used for producing metallic iron and/or an iron alloy and/or that the non-magnetic reaction product is used as a mineral fertilizer and/or for performing a Bayer process.

## Revendications

1. Procédé d'exploitation de boues rouges, selon lequel au moins les étapes suivantes sont réalisées :
a) la fabrication d'une suspension aqueuse, qui comprend des boues rouges et au moins un sel de calcium ;
b) le chauffage de la suspension à une température comprise entre 42 °C et 55 °C ; et
c) la séparation d'au moins une partie d'une phase aqueuse d'un mélange de produits solide formé à l'étape b) ;
d) le mélange du mélange de produits séparé à l'étape c) avec une biomasse ; et
e) le chauffage du mélange de produits mélangé avec une biomasse à l'étape d) à une température comprise entre 250 °C et 450 °C.

2. Procédé selon la revendication 1, **caractérisé en ce qu'**à l'étape a), un pH de la suspension est ajusté à au moins 10, notamment à au moins 12, et/ou un rapport en poids entre les boues rouges et l'eau est ajusté à une valeur comprise entre 0,8 et 1,2.

3. Procédé selon la revendication 1 ou 2, **caractérisé en ce qu'**à l'étape a), un rapport en poids entre le sel de calcium et les boues rouges est ajusté à une valeur d'au moins 0,15, notamment d'au moins 0,20, et/ou un rapport molaire entre le calcium et l'aluminium est ajusté à une valeur comprise entre 1,6 et 2,0, notamment à 1,8.

4. Procédé selon l'une quelconque des revendications 1 à 3, **caractérisé en ce que** la suspension est chauffée à l'étape b) pendant une durée comprise entre 10 minutes et 6 heures, notamment entre 30 minutes et 2 heures, de préférence entre 1 heure et 2 heures.

5. Procédé selon l'une quelconque des revendications 1 à 4, **caractérisé en ce que** la phase liquide est séparée du mélange de produits solide à l'étape c) au moins en majorité et/ou au moyen d'un filtre-presse et/ou au moyen d'un filtre-presse à chambre et/ou au moyen d'un séparateur.

6. Procédé selon l'une quelconque des revendications 1 à 5, **caractérisé en ce que** la phase liquide séparée à l'étape c) est déshydratée et/ou mélangée avec du CO₂ et/ou mélangée avec un carbonate alcalin, notamment avec de la soude et/ou du trona, pour la récupération d'au moins un composé d'aluminium, notamment Al(OH)₃, et/ou utilisée pour la réalisation d'un procédé de Bayer et/ou pour le traitement d'eaux résiduaires et/ou pour la récupération d'une lessive alcaline.

7. Procédé selon l'une quelconque des revendications 1 à 6, **caractérisé en ce que** du bois, des copeaux de bois, de l'écorce, de la paille, de la bagasse, de la pulpe de feuilles, des déchets végétaux, de l'herbe, du feuillage, du fumier, de l'huile végétale, des boues d'épuration, du lisier, des ordures ménagères organiques et/ou de la sciure sont utilisés en tant que biomasse.

8. Procédé selon l'une quelconque des revendications 1 à 7, **caractérisé en ce que** le mélange de produits mélangé avec une biomasse à l'étape d) est chauffé à l'étape e) avec exclusion de l'oxygène et/ou à une température comprise entre 280 °C et 400 °C.

9. Procédé selon la revendication 8, **caractérisé en ce qu'**après le chauffage selon l'étape e), au moins un produit de réaction gazeux d'au moins un produit de réaction solide et/ou d'au moins un produit de réaction magnétique est séparé, de préférence au moyen d'un procédé de séparation magnétique humide, d'au moins un produit de réaction non magnétique.

10. Procédé selon la revendication 9, **caractérisé en ce qu'**un produit de réaction gazeux est séparé, qui comprend du CO et/ou de l'H₂ et/ou du CH₄, et/ou **en ce qu'**un produit de réaction magnétique est séparé, qui comprend de la magnétite et/ou de la maghémite, et/ou **en ce qu'**un produit de réaction non magnétique est séparé, qui comprend du charbon et/ou au moins un silicate et/ou au moins un carbonate et/ou un composé d'aluminium.

11. Procédé selon la revendication 10, **caractérisé en ce que** le produit de réaction gazeux est utilisé pour la réalisation d'un procédé de Fischer-Tropsch et/ou d'un procédé Gas to Liquids et/ou **en ce que** le produit de réaction magnétique est utilisé pour la fabrication de fer métallique et/ou d'un alliage de fer et/ou **en ce que** le produit de réaction non magnétique est utilisé en tant qu'engrais minéral et/ou pour la réalisation d'un procédé de Bayer.
